# EUROPÄISCHE PATENTSCHRIFT

(11) **EP 3 587 368 B1**
(45) Veröffentlichungstag und Bekanntmachung des Hinweises auf die Patenterteilung: **07.09.2022**
(21) Anmeldenummer: 19179514.5
(22) Anmeldetag: 11.06.2019
(51) Int. Cl.: C03C 17/00, C03C 17/22

(54) **LICHTSYSTEM FÜR EIN FAHRZEUG**
LIGHTING SYSTEM FOR A VEHICLE
SYSTÈME D'ÉCLAIRAGE POUR UN VÉHICULE

(30) Priorität: 22.06.2018 DE 202018103529 U
(43) Veröffentlichungstag der Anmeldung: 01.01.2020
(73) Patentinhaber: Magna Car Top Systems GmbH, 74321 Bietigheim-Bissingen (DE)
(72) Erfinder: ENK, Ann-Kathrin, 96050 Bamberg (DE); GRILLO, Michelangelo, 74366 Kirchheim (DE)
(74) Vertreter: Rausch, Gabriele

(56) Entgegenhaltungen:
- DE-U1-202017 103 060
- US-A1- 2016 003 445
- US-B1- 9 914 390

## Beschreibung

Die Erfindung betrifft ein Lichtsystem für ein Fahrzeug mit Glasflächen für Fenster und/oder Dachmodule und mit Auskleidungen des Innenraums, wobei die Glasflächen wenigstens auf einer Seite mindestens teilweise mit Keramikpaste bedeckt sind.

### Stand der Technik

Zunehmend besteht der Wunsch in der Automobilindustrie, Fahrzeuge individuell auszugestalten und dem Käufer die Möglichkeit zu geben, individuelle Akzente zu setzen. Hier wird gerade die Ausgestaltung mit Farben und Licht von immer größerer Bedeutung.

Aus dem Stand der Technik ist bekannt, Glasflächen im Fahrzeug mit Keramikpaste einzufärben. Die EP 1 712 529 A1 beschreibt Fahrzeugscheiben, die mit einer farbigen Keramikpaste behandelt werden, um sie farblich ansprechend bzw. blickdicht auszugestalten.

Dabei werden Teile der Fahrzeugfenster oder das gesamte Fahrzeugfenster mit der Keramikpaste behandelt. Dabei wird die Paste mit unterschiedlichen Druckverfahren auf dem Glas aufgebracht und gegebenenfalls eingebrannt.

Aus der DE 10 2009 055 427 A1 ist eine Lösung zur Beleuchtung des Innenraums bekannt. Dabei wird ein Innenverkleidungsteil des Kraftfahrzeugs mit einer Lichtquelle versehen, wobei bei dieser beispielhaften Lösung das Licht durch eine ausgedünnte Kunststoffoberfläche durchscheint.

Die US 2016/003445 A1 zeigt einen Glasfläche mit einer strukturierten Beschichtung und einer randständigen Beleuchtung. Als Beschichtung sind Metalle vorgesehen oder ein reflektierender Lack.

US 9 914 390 B1 zeigt einen Bereich einer Glasfläche im Fahrzeug, der mit einem photolumineszenzfähigen Material beschichtet ist.

Es ist Aufgabe der Erfindung, ein Lichtsystem für ein Fahrzeug zu schaffen, das mit den Möglichkeiten der Gestaltung der Glaselemente des Fahrzeugs sowie mit Lichtelementen arbeitet, um eine individuelle Gestaltung zu erreichen.

Gelöst wird die Aufgabe mit einem Lichtsystem nach dem unabhängigen Anspruch 1 für ein Fahrzeug mit Glasflächen für Fenster und/oder Dachmodule und mit Auskleidungen des Innenraums, wobei die Glasflächen wenigstens auf einer Seite mindestens teilweise mit Keramikpaste bedeckt sind, wobei die Keramikpaste reflektierende Partikel aufweist.

In einfachen Grundausgestaltung des Lichtsystems wird das Sonnenlicht verwendet, um die reflektierenden Partikel der Keramikpaste anzuleuchten. Dadurch entsteht ein glitzernder Effekt, der zur Aufwertung der Glasflächen dient. Vorteilhafterweise wird die Keramikpaste in unterschiedlichen Designs aufgebracht, was zur unterschiedlichen Ausgestaltung der Glasflächen des Fahrzeuges führt.

Vorteilhafterweise wird das Lichtsystem für Glasflächen verwendet, die entweder plan sind oder an die Kontur des Fahrzeugs angepasst vorliegen.

Wenn die Glasflächen aus Verbundglas bestehen, wird die Keramikpaste zwischen den beiden verbunden Glasflächen aufgebracht.

Die Glasflächen werden von mindestens einem Lichtmodul mindestens teilweise umrandet. Durch die Verwendung eines Lichtmoduls wird die Kombination aus Glasfläche und Lichtmodul unabhängig vom Tageslicht und der gewünschte, schimmernde Effekt kann jederzeit erzielt werden. Es ist von Vorteil, wenn die Lichtmodule unmittelbar am Rand der Glasflächen angebracht sind. Dadurch wird das Licht der Lichtmodule direkt am Rand der Glasfläche eingekoppelt.

In einer alternativen Ausführungsform werden die Lichtmodule in der Innenverkleidung des Fahrzeugs, die die Glasflächen umgeben, angebracht. Durch die beanstandete Anordnung der Lichtmodule von der Glasfläche kann der Winkel der Einstrahlung sehr gut festgelegt und der Glitzereffekt optimiert werden.

### Beschreibung der Erfindung

Die Erfindung wird nachfolgend beispielhaft unter Bezugnahme auf die beigefügte Zeichnung beschrieben.
Fig. 1 zeigt eine schematische Darstellung der beispielhaften Ausführungsform.
Fig. 2 zeigt eine weitere Ausführungsform,
Fig. 3 zeigt eine dritte Ausführungsform.

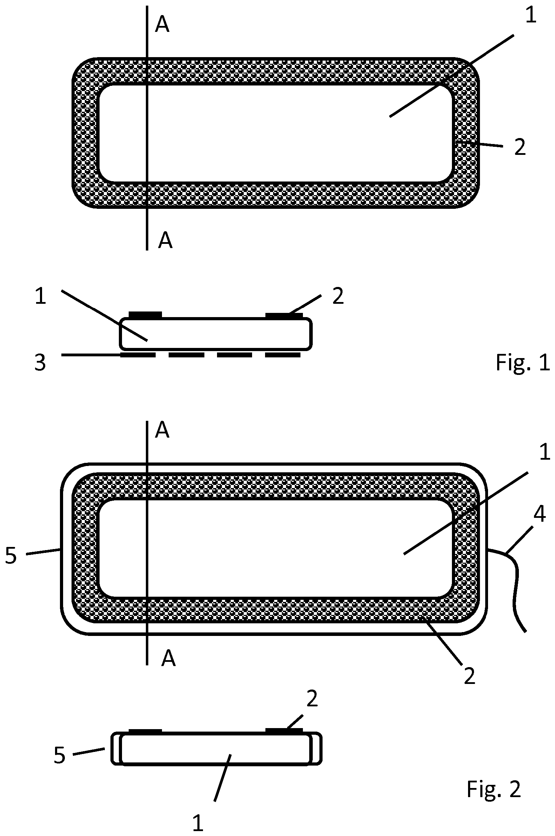

In Figur 1 zeigt in einer schematischen Darstellung eine Glasfläche, wie sie in einem Fahrzeug als Fahrzeugfenster, als Windschutzscheibe oder als Teil eines Schiebedaches oder Dachmoduls verwendet werden könnte. Die dargestellte Glasfläche 1 ist in den Ausführungsbeispielen als planes Bauteil gezeigt. In der realen Ausführungsform sind die Glasflächen an die Kontur des Fahrzeuges angepasst und weisen eine bombierte, gekrümmte oder gebogene oder sonstig strukturierte Fläche auf.

Die Glasfläche 1 ist mindestens teilweise mit einer Keramikbeschichtung 2 versehen. Diese Keramikbeschichtung 2 wird im Ausführungsbeispiel als Rand dargestellt, die Keramikbeschichtung kann dabei flächig ausgeführt sein oder eine Struktur wie Streife, Punkte usw. aufweisen.

In der Schnittdarstellung entlang des Schnittes A-A wird zusätzlich zu der rahmenartigen Keramikbeschichtung 2 eine rückseitige Beschichtung 3 exemplarisch dargestellt. Eine solche rückseitige Beschichtung 3 kann zusätzlich die Farbe der gesamten Glasfläche 1 verändern und beispielsweise einen Sonnenschutz beinhalten.

Eine solche Ausführungsform kommt ausschließlich mit dem Tageslicht aus, die Sonnenstrahlen werden von den reflektierenden Partikeln in der Keramikpaste der Keramikbeschichtung 2 reflektiert.

Die Keramikbeschichtung 2 kann zum Inneren des Fahrzeuges hin angebracht sein, oder auf der Außenseite der Glasflächen die Außenerscheinung des Fahrzeuges beeinflussen.

Figur 2 zeigt eine Ausführungsform des Lichtsystems mit einer zusätzlichen künstlichen Lichtquelle. Wiederum weist die Glasfläche eine Keramikbeschichtung 2 auf, die als Rahmen ausgestaltet ist.

Die Glasfläche 1 wird von einem Leuchtmittelband 5 rahmenartig umfasst. Im Ausführungsbeispiel erstreckt sich das Leuchtmittelband entlang des gesamten Randes der Glasfläche 1. Das Leuchtmittelband ist über einen elektrischen Anschluss 4 kontaktiert. Das Leuchtmittelband kann aus einem Band von LEDs bestehen, das entlang des Randes der Glasfläche 1 angebracht wird. Eine Möglichkeit der Installation des Leuchtmittelbandes besteht auch darin, das Leuchtmittelband direkt in ein Dichtungsband 8 zu integrieren, mit dem die Glasfläche 1 im Fahrzeug fest montiert oder in einen verschieblichen Rahmen eingebracht wird.

Es ist aber auch möglich einzelnen LEDs direkt an der Glasfläche 1 anzubringen, die über den Glasrand direkt Licht in die Glasfläche einkoppeln.

Für Glasflächen im Fahrzeug, die nicht fest mit der Karosserie verbunden sind oder keinen Rahmen aufweisen, ist eine Montage eines Leuchtmittelbandes 5 oder auch einzelner Leuchtmittel direkt an der Glasfläche schwierig.

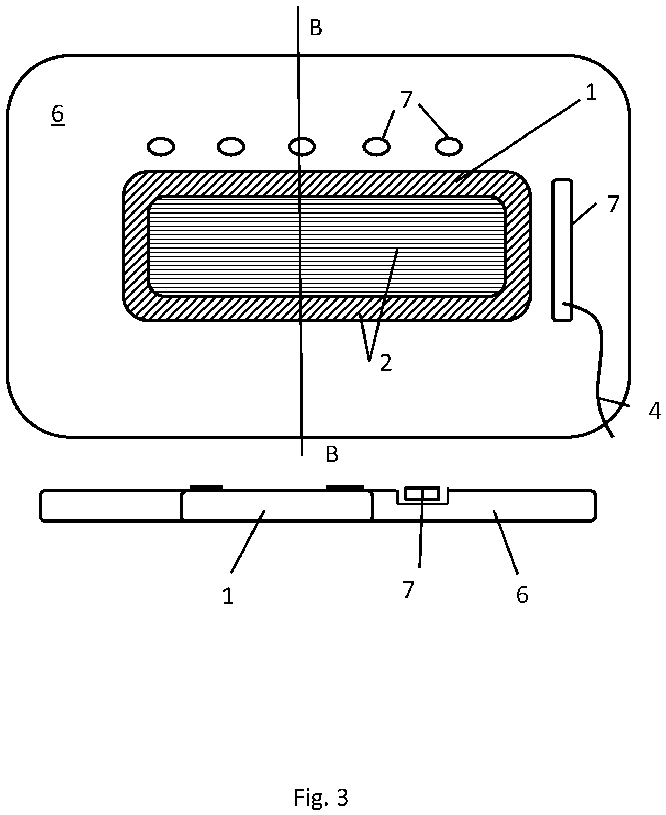

Figur 3 zeigt hier eine Lösung für Glasflächen, die über Lichtmodule 7 beleuchtet werden, die fest im Fahrzeug, genauer in der Innenraumverkleidung 6 des Fahrzeugs eingelassen sind. In der beispielhaften Darstellung der Figur 3 ist auf der rechten Seite ein Lichtband als Lichtmodul 7 dargestellt, das wiederum über einen elektrischen Anschluss verfügt.

Exemplarisch sind auch einzelne Lichtmodule 7 oberhalb der Glasfläche 1 zu erkennen. Sie sind entlang einer Längsachse der exemplarischen Glasfläche 1 angeordnet aber unabhängig voneinander als Einzellichtquellen ausgebildet. In der gezeigten Ausführungsform ist zudem die Glasfläche 1 mit der Keramik Beschichtung zu erkennen, wobei in diesem Beispiel 2 unterschiedliche Strukturen für den Rand und für die Innenfläche gewählt wurden.

In der gezeigten Ausführungsform der Figur 3 ist die Glasfläche 1 sowie die Innenraumverkleidung 6 auf einer Ebene dargestellt.

In einem Fahrzeug ergeben sich durch die dreidimensionale Ausgestaltung allerdings noch weitere Möglichkeiten, in dem die Lichtmodule beabstandet von der Glasfläche und nicht in derselben Ebene angebracht sind, und die Glasfläche von ihnen beleuchten.

Ein Beispiel ist hier ein Glasschiebedach, das auf beiden Seiten längsverschiebbar im Dach der Karosserie geführt ist. Im Innenraum ist das Glasschiebedach seitlich von der Innenraumverkleidung 6, dem Dachhimmel eingefasst. Das Glasschiebedach lässt sich somit von Leuchtmodulen 7, die im Dachhimmel angebracht sind, anstrahlen.

### Bezugszeichenliste

1 Glasfläche
2 Keramikbeschichtung
3 Rückseitige Beschichtung
4 Elektrischer Anschluss
5 Leuchtmittelband
6 Innenraumverkleidung
7 Lichtmodul
8 Dichtungsband

## Patentansprüche

1. Lichtsystem für ein Fahrzeug mit Glasflächen für Fenster und/oder Dachmodule und mit Auskleidungen des Innenraums, wobei die Glasflächen wenigstens auf einer Seite mindestens teilweise mit Keramikpaste bedeckt sind, wobei die Keramikpaste reflektierende Partikel aufweist und die Glasflächen von mindestens einem Lichtmodul (7) mindestens teilweise umrandet sind.

2. Lichtsystem nach Anspruch 1, **dadurch gekennzeichnet, dass** die Keramikpaste in unterschiedlichen Designs aufgebracht ist:

3. Lichtsystem nach Anspruch 1 oder 2, **dadurch gekennzeichnet, dass** die Glasflächen plan oder an die Kontur des Fahrzeugs angepasst vorliegen.

4. Lichtsystem nach Anspruch 1 bis 3, **dadurch gekennzeichnet, dass** die Glasflächen aus Verbundglas bestehen, so dass die Keramikpaste zwischen den beiden verbunden Glasflächen aufgebracht ist.

5. Lichtsystem nach den Ansprüchen 1 bis 4, **dadurch gekennzeichnet, dass** die Lichtmodule unmittelbar am Rand der Glasflächen angebracht sind.

6. Lichtsystem nach den Ansprüchen 1 bis 4, **dadurch gekennzeichnet, dass** die Lichtmodule in der Innenverkleidung des Fahrzeugs, die die Glasflächen umgeben angebracht sind.

## Claims

1. Lighting system for a vehicle having glass surfaces as windows and/or roof modules and having linings in the interior, wherein the glass surfaces are at least on one side covered at least partially with ceramic paste, wherein the ceramic paste has reflective particles and the glass surfaces are at least partially surrounded by at least one light module (7).

2. Lighting system according to Claim 1, **characterized in that** the ceramic paste is applied in different designs.

3. Lighting system according to Claim 1 or 2, **characterized in that** the glass surfaces are planar or have been adapted to the contour of the vehicle.

4. Lighting system according to Claim 1 to 3, **characterized in that** the glass surfaces are made from laminated glass, and the ceramic paste is thus applied between the two laminated glass surfaces.

5. Lighting system according to Claims 1 to 4, **characterized in that** the light modules are mounted directly at the periphery of the glass surfaces.

6. Lighting system according to Claims 1 to 4, **characterized in that** the light modules are mounted in the inner lining of the vehicle that surrounds the glass surfaces.

## Revendications

1. Système lumineux destiné à un véhicule pourvu de surfaces de verre destinées à des vitrages et/ou des modules de toit et d'habillages de l'habitacle, les surfaces de verre étant au moins partiellement recouvertes de pâte céramique sur au moins une face, la pâte céramique comportant des particules réfléchissantes et les surfaces vitrées d'au moins un module lumineux (7) étant au moins partiellement bordé.

2. Système lumineux selon la revendication 1, **caractérisé en ce que** la pâte céramique est appliquée selon différentes conceptions.

3. Système lumineux selon la revendication 1 ou 2, **caractérisé en ce que** les surfaces de verre sont prévue pour être planes ou adaptées au contour du véhicule.

4. Système lumineux selon la revendication 1 à 3, **caractérisé en ce que** les surfaces de verre sont en verre feuilleté de sorte que la pâte céramique est appliquée entre les deux surfaces de verre reliées.

5. Système lumineux selon les revendications 1 à 4, **caractérisé en ce que** les modules lumineux sont fixés directement en bordure des surfaces de verre.

6. Système lumineux selon les revendications 1 à 4, **caractérisé en ce que** les modules lumineux sont montés dans l'habillage intérieur du véhicule et entourent les surfaces de verre.
